# EUROPEAN PATENT APPLICATION

(11) **EP 4 810 888 A1**
(43) Date of publication of application: **23.09.2026**
(21) Application number: 25164045.4
(22) Date of filing: 17.03.2025
(51) Int. Cl.: F28D 20/00, G01L 19/14, G01K 5/28

(54) **PRESSURE DETECTOR, THERMAL ENERGY STORAGE VESSEL, THERMAL ENERGY STORAGE SYSTEM AND METHOD FOR CONTROLLING AT LEAST ONE THERMAL ENERGY STORAGE VESSEL**

(71) Applicant: Mitsubishi Electric Corporation, Tokyo 100-8310 (JP)
(72) Inventor: Freeman, James, Livingston, EH54 5DJ (GB); Kawaley, Georgeanna, Livingston, EH54 5DJ (GB)
(74) Representative: Pfenning, Meinig & Partner mbB

(57) **Abstract**

A pressure detector, a thermal energy storage vessel, a thermal energy storage system and a method for controlling at least one thermal energy storage vessel are provided. The pressure detector comprises a sealed tube having an internal space, wherein a compressible fluid is located in the internal space of the sealed tube. Moreover, the pressure detector comprises a pressure sensor which is configured to detect a pressure of the compressible fluid in the sealed tube, wherein the pressure sensor is configured to convert the detected pressure into a mechanical and/or electrical signal, characterized in that the sealed tube has a length in the range of ≥ 50 cm. The pressure detector according to the invention allows a simpler, less expensive and less energy consuming determination of an average temperature and of a state of charge of a thermal energy storage vessel than prior art average temperature detectors.

## Description

A pressure detector, a thermal energy storage vessel, a thermal energy storage system and a method for controlling at least one thermal energy storage vessel are provided. The pressure detector comprises a sealed tube having an internal space, wherein a compressible fluid is located in the internal space of the sealed tube. Moreover, the pressure detector comprises a pressure sensor which is configured to detect a pressure of the compressible fluid in the sealed tube, wherein the pressure sensor is configured to convert the detected pressure into a mechanical and/or electrical signal, characterized in that the sealed tube has a length in the range of ≥ 50 cm. The pressure detector according to the invention allows a simpler, less expensive and less energy consuming determination of an average temperature and of a state of charge of a thermal energy storage vessel than prior art average temperature detectors.

Hot water tanks are often designed to promote thermal stratification by incorporating a cold water feed at the bottom and a hot water outlet at the top. In typical domestic hot water (DHW) systems, the potable water in a storage tank might be heated periodically to a temperature of 60 °C or higher. As water is extracted from the top of the tank, top up water from the cold mains is fed in at the bottom, typically at temperatures of around 10 °C. Usually, a temperature sensor is located approximately half way along the height of the storage tank. Typically, the sensor will consist of a thermistor (a resistor with a resistance that varies with temperature), located inside a pocket or thermowell in the wall of the tank. The measurement data of the sensor is used to provide a feedback to the control of the heat source (e.g. a heat pump). When the measured temperature drops below a lower reference value, heating of the tank is activated until the measured temperature rises above a higher reference value, at which point the heating process is stopped.

Fluid storage tanks may also be used in central heating systems to provide hydraulic separation between the sources of heat generation (e.g. a boiler, heat pump, solar thermal system, etc.) and the heat emitter circuit. Here, the tank can serve as a common mixing point for multiple heat sources, and to provide a degree of thermal buffering to limit the frequency of on-off cycling of the heat source. In this type of application, the tank will normally have hot feeds from the heat source side located near the top of the tank, and cold returns from the heat emitter circuit located near the bottom. Thus, the degree of temperature stratification in the tank will be determined by the design flow-return temperature difference (ΔT) of the heating system.

In both the domestic hot water (DHW) and central heating systems mentioned above, the storage tank may also include additional components for internal heating of the stored fluid, such as heat exchanger coils or electric immersion heaters. Depending on their position in the tank, these heat sources can also affect the temperature stratification profile in the tank. If the tank is well insulated, it can be assumed that the temperature variation in the horizontal plane is small, thus most temperature variation can be assumed to occur in the vertical plane.

A problem arising from the common arrangement described above is that the single point of temperature measurement provides a poor estimation of the quantity of energy stored in the tank (the so-called state of charge, or in short "SOC"). If the tank is well stratified, the measured temperature at a single height in the tank may show little or no variation in temperature while water is being extracted from the top of the tank, until such a time when the cold water introduced from the bottom reaches the height of the temperature sensor, at which point the temperature may drop suddenly.

Energy management systems (EMS) that provide advanced optimization of building energy usage are becoming increasingly popular. These systems use pricing signals such as variable energy-price tariffs to schedule the operation of smart appliances including smart heating devices (e.g. heat pumps and electric water heaters) to minimize costs to the end user. Such optimization services are improved by having an accurate estimation of the SOC of a connected energy storage device, so that the quantity of energy and the time duration associated with a charging or discharging cycle can be estimated.

For liquid water at atmospheric pressure, the variation in specific heat capacity between 10-70 °C is less than 1%. Thus, the average (mean) temperature of the fluid in the tank should be expected to vary approximately linearly with the internal energy stored in the tank fluid, and should therefore be a good indicator of the SOC. On the other hand, a measurement of temperature at a single location is of much less value for a typical-size domestic hot water tank (e.g., > 100 litres), where a significant degree of temperature stratification can be expected to occur.

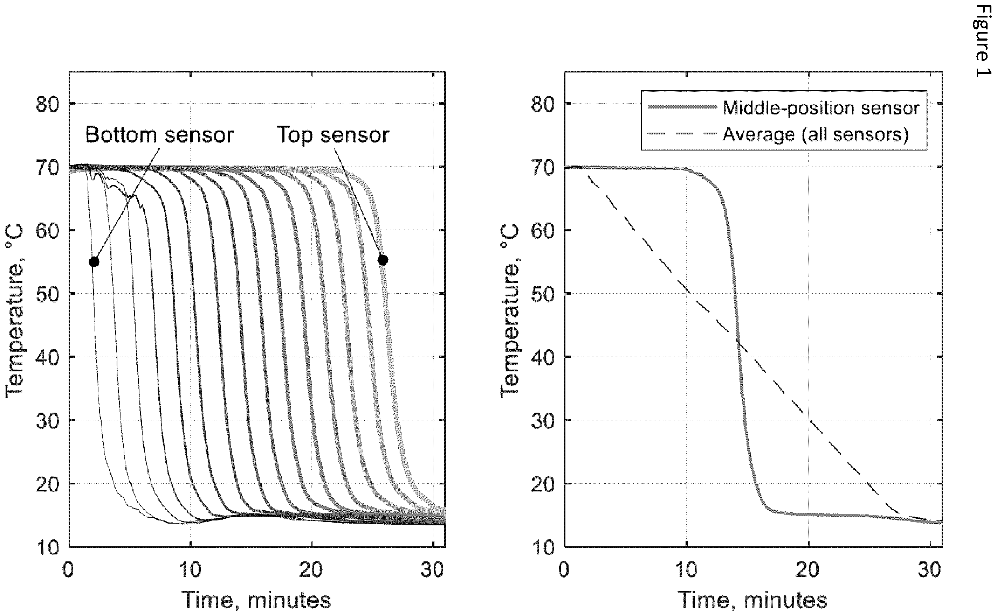

This situation is demonstrated by the plots in Figure 1. The left plot shows the temperature which is measured at 15 equally-spaced intervals along the vertical axis of a domestic hot water tank. The plot shows a discharging process where hot water is extracted from the top of tank and replaced with cold water fed in from the bottom. The thinnest, darkest line indicates the temperature measurement nearest the bottom of the tank, while the thickest, palest line represents the measurement nearest the top. It can easily be seen that the bottom-most sensor drops quickly in temperature after 1 minute, while the top-most sensor shows no observable change in temperature for more than 20 minutes. The plot on the right in Figure 1 shows a comparison between the measurement of the sensor positioned nearest the middle of the vertical height of the tank (solid line) and the instantaneous spatially-averaged mean of all of the sensors (dashed line). The mean temperature can be observed to decrease much more gradually than the single sensor measurement, and the maximum difference between the two values is more than 20 K.

For the situation described above, an accurate estimation of the SOC of a hot water tank could principally be provided by installing multiple temperature sensors at various heights in the tank and integrating the measurements to provide an estimated mean temperature of the bulk fluid. This is the measuring principle which is performed in the system of US 9,441,889 B2 and is illustrated in Figure 1.

However, this solution is costly and complicated to install because it requires many sensors located at different positions along the tank and requires a higher processing capability, i.e. a more complicated control and a more energy-consuming controller. While this may be a feasible solution for high-end commercial applications and industrial processes, it may be beyond the budget of smaller, residential applications.

Starting from the above, it was the objective of the present invention to provide a device that provides information which allows a simpler, less expensive and less energy consuming determination of an average temperature and of a state of charge of a thermal energy storage vessel. Moreover, a thermal energy storage vessel having this advantage should be provided. Furthermore, a thermal energy storage system which is capable of determining an average temperature, preferably also a state of charge, of its thermal energy storage vessel in a simpler, less expensive and less energy consuming manner should be provided. Additionally, a method for controlling at least one thermal energy storage vessel should be provided which allows a simpler, less expensive and less energy consuming determination of an average temperature and of a state of charge of the at least one thermal energy storage vessel.

The objective is solved by the pressure detector having the features of claim 1, the thermal energy storage vessel having the features of claim 5, the thermal energy storage system having the features of claim 10 and the method having the features of 13. The dependent claims illustrate advantageous embodiments.

According to the invention, a pressure detector is provided, comprising
a) a sealed tube having an internal space, wherein a compressible fluid is located in the internal space of the sealed tube; and
b) a pressure sensor which is configured to detect a pressure of the compressible fluid in the sealed tube, wherein the pressure sensor is configured to convert the detected pressure into a mechanical and/or electrical signal;
characterized in that the sealed tube has a length in the range of ≥ 50 cm.

The pressure detector according to the invention allows a simpler, less expensive and less energy consuming determination of an average temperature and of a state of charge of a thermal energy storage vessel. This is achieved by the capability of the device to detect a pressure of the compressible fluid in its sealed tube. Said pressure is dependent on the temperature of the compressible fluid which adapts to the temperature of its surrounding, wherein the surrounding can be an interior space of a thermal energy storage vessel. Since there is a defined relationship between the pressure of the compressible fluid inside of the sealed tube and the temperature of the compressible fluid inside of the sealed tube and thus the temperature of its surrounding, the pressure detector allows a determination of a temperature of an environment surrounding its sealed tube. If the surrounding is the interior space of a thermal energy storage vessel, the determined temperature of said interior space can be used to determine a state of charge of the thermal energy storage vessel. In this context, the considerable length of the sealed tube of at least 50 cm allows the determination of an average temperature of a surrounding which shows a temperature distribution along said length, like e.g. an interior space of a thermal energy storage vessel which shows stratification.

The sealed tube of the pressure detector can have a length in the range of ≥ 60 cm, preferably ≥ 70 cm, more preferably ≥ 80 cm, even more preferably ≥ 90 cm, optionally ≥ 100 cm. The higher the length, the more accurate the determination of an average temperature can be, especially in cases in which an interior space of a thermal energy storage vessel has a large dimension in one direction (e. g. a vertical direction).

Moreover, the sealed tube of the pressure detector can have an inner diameter in the range of 3 to 15 mm. An interior diameter in this range represents an optimum between a signal change produced by a certain temperature and a promptness of a detection of said temperature change. For example, if the diameter was shorter, a temperature change produces a lower signal and, if the diameter was shorter, it would take a longer time until the compressible fluid adopts the temperature change along its diameter extension.

Furthermore, the sealed tube of the pressure detector can be connected to the pressure sensor, preferably by a threaded connection and/or a compression fitting. The advantage is that the pressure detector is mechanically very stable.

Besides, the sealed tube of the pressure detector can have a wall which has thickness in the range of 1 to 2 mm. This represents an optimum between mechanical stability and promptness of a response to a temperature change of the environment.

Additionally, the sealed tube of the pressure detector can have a wall which comprises of consists of a material having a thermal conductivity in the range of ≥ 10 W/m·K, preferably in the range of ≥ 50 W/m·K, more preferably in the range of ≥ 100 W/m·K. The higher the thermal conductivity, the faster a response to a temperature change of the environment.

Moreover, the sealed tube of the pressure detector can have a wall which comprises or consists of a metal, wherein the metal is preferably selected from the group consisting of copper, bronze, brass, stainless steel and combinations thereof. A metal has the advantage that it provides high mechanical stability, a high long-term stability and a high thermal conductivity, which is especially true for the mentioned metals.

The compressible fluid in the internal space of the sealed tube of the pressure detector can comprise or consists of a gas, wherein the gas is preferably air. A gas has the advantage that it changes its pressure approximately linearly depending on its temperature, providing it behaves like an ideal gas obeying the ideal gas laws. Air has the advantage that the pressure detector can be provided with less costs, i.e. in an economical manner.

Moreover, the compressible fluid can comprise of consist of a gas and a liquid. The liquid can be an incompressible liquid. Since a liquid has a thermal expansion coefficient, the liquid contributes to a rise in pressure inside the sealed tube depending on a rise in temperature. Thus, having a liquid in the sealed tube beside a gas increases the detection sensitivity and accuracy of temperature changes. The gas is preferably air. The liquid is preferably a liquid having a boiling point of ≥ 75 °C, wherein the liquid is more preferably selected from the group consisting of water, glycol, ethanol and combinations thereof. Water, glycol and ethanol have the advantage that the pressure detector can be provided in at low costs, i.e. in an economical manner. Glycol has the advantage that its thermal expansion coefficient is higher than that of water, which means that the pressure detector has a higher detection sensitivity and accuracy. This effect is even more pronounced with ethanol because ethanol has an even higher thermal expansion coefficient than glycol. The sealed tube can contain the liquid in a volume of 50 to 90 Vol.-%, preferably 60 to 90 Vol.-%, more preferably in 70 to 90 Vol.-%, even more preferably 80 to 90 Vol.-%, in relation to the total volume of the internal space of the sealed tube. The higher the amount of liquid in the sealed tube, the higher its contribution to the change in pressure due to a change in temperature becomes, i.e. the higher the detection sensitivity and accuracy becomes.

Furthermore, the compressible fluid can, at a temperature of 20 °C, have a pressure difference to the atmosphere, optionally a pressure difference to 101,325 kPa, in the range of ≤ 0,1 kPa, preferably ≤0,01 kPa, more preferably 0 kPa. The advantage is that the pressure detector can be provided in an easy and economical manner because its tube does not have to be pressurized or vacuumed before its sealing to the environment

The pressure sensor can comprise a pressure transducer which is based on a strain gauge and which is configured to produce an electrical voltage upon mechanical deformation, or consist thereof. The advantage of the pressure sensor producing an electrical voltage (output) is that said electrical output can be received by a controller which is configured to convert the electrical output into a temperature value and also into a state of charge value. The temperature value and state of charge value can then be used by the controller to control components of a thermal energy storage system.

Further, according to the invention, a thermal energy storage vessel is provided, comprising
a) an interior space, wherein the interior space has a top wall and a bottom wall and a predefined height between the top wall and the bottom wall; and
b) a thermal energy storage medium located in the interior space; and
c) a pressure detector according to the invention;

wherein the sealed tube of the pressure detector extends between the top
wall and the bottom wall of the interior space of the thermal energy storage vessel.

Since the thermal energy storage vessel according to the invention comprises the pressure detector according to the invention, it allows a simpler, less expensive and less energy consuming determination of an average temperature and of a state of charge of the thermal energy storage vessel.

In the thermal energy storage vessel, the sealed tube of the pressure detector can be arranged in a vertical orientation in the interior space of the vessel. This implies that the sealed tube extends along the predefined height of the interior space.

The sealed tube of the pressure detector can extend over a length of at least 80 %, preferably at least 85 %, more preferably at least 90 %, especially at least 95%, optionally 100%, of the predefined height of the interior space. The more extensive the extension, the more accurate is the detection of an average temperature of the interior space of the vessel.

Moreover, the sealed tube can extend in central region of the interior space, wherein the central region preferably has a distance to a vertical central axis of the interior space which is maximally 50 %, preferably maximally 25 %, more preferably maximally 10 %, most preferably maximally 5 %, of the distance between the vertical central axis and a shortest distance to inner walls of the thermal energy storage vessel. The more central the sealed tube is located within the interior space, the more accurate is the determination of the average temperature of the interior space of the vessel.

Furthermore, the sealed tube can be connected to a wall of the vessel, preferably by a compression fitting, wherein the compression fitting more preferably forms a liquid-tight seal. The advantage is that the thermal energy storage vessel is mechanically very stable and a leakage of liquid at the connection point of the pressure sensor to the vessel can be prevented. Moreover, compared to thermal energy storage vessels which contain multiple point-measurement sensors, a number of penetration points for sensors into the vessel and sealing points for sensors in the vessel is reduced. Thus, the thermal energy storage vessel can be provided in an easier manner and is more long-term stable.

The pressure sensor can be located at least partially, preferably completely, outside of the interior space of the vessel. The advantage is that the pressure sensor has less to no contact with a fluid which is present inside of the interior space of the vessel (e.g. water), reducing a possible detrimental impact of said fluid on the functioning of the pressure sensor. Thus, it can be better ensured that the thermal energy storage vessel shows its advantages over long periods of time.

The thermal energy storage vessel can have walls which comprise a thermal insulation. The advantage is that the use of the thermal energy storage device is more energy-efficient and thus more economical. Moreover, a more accurate determination of the temperature and state of charge of the thermal energy storage vessel can take place. Furthermore, compared to thermal energy storage vessels which contain multiple point-measurement sensors, an integrity of the insulation is minimally disturbed. This allows a lower loss of thermal energy over time and a more energy-efficient operation of the thermal energy storage vessel.

Moreover, the thermal energy storage vessel can have an interior space having a volume of > 100 L. The advantage is that that stratification plays a significant role in these kind of thermal energy storage vessels and the pressure sensor according to the invention is particularly advantageous in these kind of thermal energy storage vessels.

Furthermore, the thermal energy storage vessel can have an interior space having a predefined height of at least 0.5 m, preferably at least 1 m, more preferably at least 1.5 m. The larger the height of the interior space, the more advantageous is the pressure sensor according to the present invention because it can more accurately detect an average temperature of the interior space of the thermal energy storage vessel.

In a preferred embodiment, the thermal energy storage medium does not change its aggregation state in a temperature range between 0 °C to 90 ° C. The thermal energy storage medium can comprise or consist of a liquid, more preferably water, an oil and/or a polyalcohol (e.g. ethylene glycol).

Further, according to the invention, a thermal energy storage system is provided, comprising
a) at least one thermal energy storage vessel according to the invention, optionally a plurality of thermal energy storage vessels according the invention; and
b) a controller;
wherein the controller is configured to receive pressure information from the pressure detector of the thermal energy storage vessel(s) and to determine an average temperature of the thermal energy storage medium of the thermal energy storage vessel(s) based on received pressure information and based on a predetermined relationship between a pressure in the interior space of the sealed tube of the pressure detector of the thermal energy storage vessel(s) and an average temperature of the thermal energy storage medium of the thermal energy storage vessel(s).

The thermal energy storage system according to the invention is capable of determining an average temperature of its thermal energy storage vessel(s) in a simpler, less expensive and less energy consuming manner.

The compressible fluid in the sealed tube of the pressure detector can consist of a gas and the predetermined relationship between a pressure in the interior space of the sealed tube and an average temperature of the thermal energy storage medium is an essentially linear relationship, preferably a relationship which has been predetermined empirically, or has been predetermined, by applying the pressure-temperature law for an ideal gas, based on the following equation: ${T}_{avg} = \left(P⋅{T}_{0}\right) / {P}_{0}$ wherein
- P:: Measured pressure [kPa]
- T_{avg}:: Average temperature of the thermal energy storage medium corresponding to P [K]
- P₀:: Reference pressure [kPa] (e.g. 101.3 kPa, i.e. normal pressure)
- T₀:: Reference average temperature of the thermal energy storage medium corresponding to P₀ [K] (e.g. 293.15 K, i.e. room temperature).

Alternatively, the compressible fluid in the sealed tube of the pressure detector can consist of a mixture of a gas and a liquid, wherein the predetermined relationship between a pressure in the interior space of the sealed tube and an average temperature of the thermal energy storage medium is an exponential relationship, preferably a relationship which has been predetermined empirically or which essentially follows the equation: ${T}_{avg} = \frac{P ⋅ {T}_{0} ⋅ \left(ΔT⋅{V}_{liquid , 0}⋅β+{V}_{liquid , 0}-1\right)}{{P}_{0} ⋅ \left({V}_{liquid , 0}-1\right)}$ wherein
- P:: Measured pressure [kPa]
- T_{avg}:: Average temperature of the thermal energy storage medium corresponding to P [K]
- P₀:: Reference pressure [kPa] (e.g. 101.3 kPa, i.e. normal pressure)
- T₀:: Reference average temperature of the thermal energy storage medium corresponding to P₀ [K] (e.g. 293.15 K, i.e. room temperature)
- V_{liquid,0}:: Liquid fraction in the sealed tube at T₀
- β:: Thermal expansion coefficient of the liquid [K⁻¹]
- ΔT:: T_{avg}-T₀ [K]

The controller of the system can be further configured to determine a state of charge of the thermal energy storage vessel based on a determined average temperature of the thermal energy storage medium and a predetermined relationship between an average temperature of the thermal energy storage medium and a state of charge of the thermal energy storage vessel. The advantage is the thermal energy storage system is capable of determining a state of charge of its thermal energy storage vessel in a simpler, less expensive and less energy consuming manner.

In this regard, the predetermined relationship is preferably as follows: $If {T}_{avg , d} \leq {T}_{set 1} , SOC = 0 \left[%\right] ;$ $If {T}_{avg , d} > {T}_{set 1} and < {T}_{set 2} , SOC is 100 ⋅ {ΔT}_{1} / {ΔT}_{2} \left[%\right] ,$ and $If {T}_{avg , d} \geq {T}_{set 2} , SOC = 100 \left[%\right] ;$ wherein
- SOC:: state of charge;
- T_{avg, d}:: determined average temperature of the thermal energy storage medium [°C];
- Tₛₑₜ₁:: preset low temperature (e.g. 20 °C);
- Tₛₑₜ₂:: preset high temperature (e.g. 60 °C);
- ΔT₁:: T_{avg} - Tₛₑₜ₁;
- ΔT₂:: Tₛₑₜ₂ -Tₛₑₜ₁.

Further, according to the invention, a method for controlling at least one thermal energy storage vessel is provided, comprising the following steps:
a) providing at least one thermal energy storage vessel according to the invention, optionally a plurality of thermal energy storage vessels according to the invention;
b) detecting a pressure value of the compressible fluid in the sealed tube of each thermal energy storage vessel;
c) determining an average temperature of the thermal energy storage medium of each thermal energy storage vessel based on each detected pressure value and based on a predetermined relationship between a pressure in the interior space of the sealed tube and an average temperature of the thermal energy storage medium;
d) determining a state of charge of each thermal energy storage vessel based on each determined average temperature and a predetermined relationship between an average temperature of the thermal energy storage medium and a state of charge of the thermal energy storage vessel; and
e) determining, based on the determined state of charge of each thermal energy storage vessel, whether the thermal energy storage vessel shall be charged with thermal energy, wherein the thermal energy storage vessel is preferably charged with thermal energy if its determined state of charge is in the range of 0 % to < 100%.

With the method according to the invention, a simpler, less expensive and less energy consuming determination of an average temperature and of a state of charge of the at least one thermal energy storage vessel and also of a plurality of thermal energy storage vessels, is possible.

In the method, if the compressible fluid in the sealed tube consists of a gas, the predetermined relationship is an essentially linear relationship, preferably a relationship which has been predetermined empirically, or has been predetermined, by applying the pressure-temperature law for an ideal gas, based on the following equation: ${T}_{avg} = \left(P⋅{T}_{0}\right) / {P}_{0}$ wherein
- P:: Measured pressure [kPa]
- T_{avg}:: Average temperature of the thermal energy storage medium corresponding to P [K]
- P₀:: Reference pressure [kPa] (e.g. 101.3 kPa, i.e. normal pressure)
- T₀:: Reference average temperature of the thermal energy storage medium corresponding to P₀ [K] (e.g. 293.15 K, i.e. room temperature);

Alternatively, in the method, if the compressible fluid in the sealed tube consists of a mixture of a gas and a liquid, the predetermined relationship is an exponential relationship, preferably a relationship which has been predetermined empirically or which essentially follows the equation: ${T}_{avg} = \frac{P ⋅ {T}_{0} ⋅ \left(ΔT⋅{V}_{liquid , 0}⋅β+{V}_{liquid , 0}-1\right)}{{P}_{0} ⋅ \left({V}_{liquid , 0}-1\right)}$ wherein
- P:: Measured pressure [kPa]
- T_{avg}:: Average temperature of the thermal energy storage medium corresponding to P [K]
- P₀:: Reference pressure [kPa] (e.g. 101.3 kPa, i.e. normal pressure);
- T₀:: Reference average temperature of the thermal energy storage medium corresponding to P₀ [K] (e.g. 293.15 K, i.e. room temperature);
- V_{liquid,0}:: Liquid fraction in the sealed tube at T₀
- β:: Thermal expansion coefficient of the liquid [K⁻¹];
- ΔT:: T_{avg}-T₀ [K].

Moreover, the predetermined relationship in step c) of the method can be as follows: $If {T}_{avg , d} \leq {T}_{set 1} , SOC = 0 \left[%\right] ;$ $If {T}_{avg , d} > {T}_{set 1} and < {T}_{set 2} , SOC is 100 ⋅ {ΔT}_{1} / {ΔT}_{2} \left[%\right] ,$ and $If {T}_{avg , d} \geq {T}_{set 2} , SOC = 100 \left[%\right] ;$ wherein
- SOC:: state of charge;
- T_{avg, d}:: determined average temperature of the thermal energy storage medium [°C];
- Tₛₑₜ₁:: preset low temperature (e.g. 20 °C);
- Tₛₑₜ₂:: preset high temperature (e.g. 60 °C);
- ΔT₁:: T_{avg} - Tₛₑₜ₁;
- ΔT₂:: Tₛₑₜ₂ -Tₛₑₜ₁.

With following Figures and Examples, the subject-matter of the invention shall be explained in more detail without wishing to limit the scope of the invention to the specific embodiments shown here. Among the following figures, Figure 1 shows no embodiment according to the invention, but is helpful to understand certain aspects thereof.

Figure 1 shows the water temperature during the discharging of a 200 L domestic hot water tank measured with a plurality of sensors (15 in total) located at different heights (i.e. vertical positions) in an interior space of a thermal energy storage vessel. The left plot shows a variation in temperature with time at different heights in the tank (i.e. determined by the different sensors in the tank). The right plot shows a comparison of the temperature measured by the middle-position sensor to the instantaneous mean of all sensors.

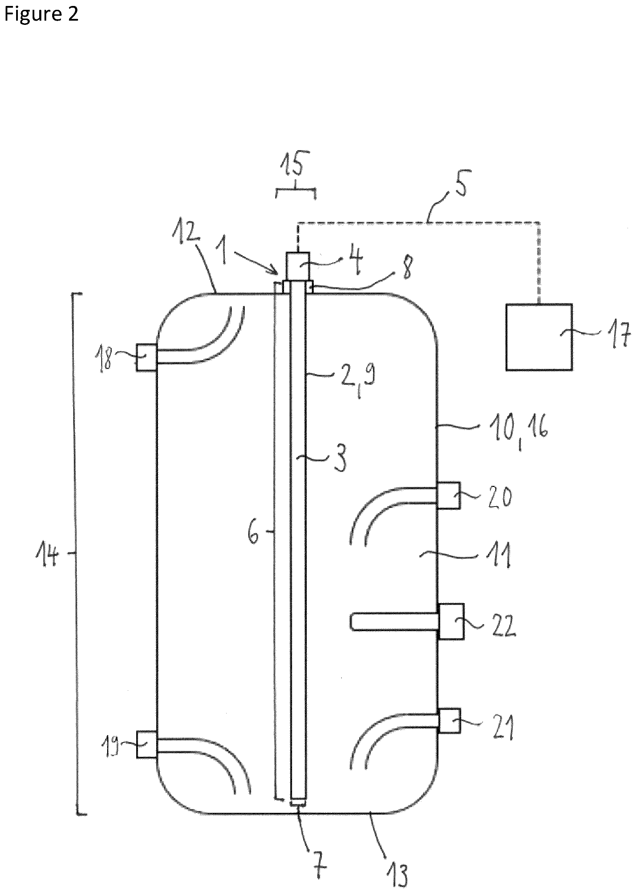

Figure 2 shows a specific example of a thermal energy storage system according to the invention. The thermal energy storage system comprises a thermal energy storage vessel 10 according to the invention. The thermal energy storage vessel 10 comprises an interior space 11, wherein the interior space 11 has a top wall 12 and a bottom wall 13 and a predefined height 14 between the top wall 12 and the bottom wall 13. Moreover, the thermal energy storage vessel comprises a thermal energy storage medium located in the interior space 11 and a pressure detector 1 according to the present invention. The pressure detector 1 comprises a sealed tube 2 having an internal space 3, wherein a compressible fluid is located in the internal space 3 of the sealed tube 2. Furthermore, the pressure detector 1 comprises a pressure sensor 4 which is configured to detect a pressure of the compressible fluid in the sealed tube 2, wherein the pressure sensor 4 is configured to convert the detected pressure into a mechanical and/or electrical signal 5. The sealed tube 2 of the pressure detector 1 has a length 6 in the range of ≥ 50 cm and extends between the top wall 12 and the bottom wall 13 of the interior space 11 of the thermal energy storage vessel 10 in a central region 15 of the interior space 11 of the thermal energy storage vessel 10. The system further comprises a controller 17 which is configured to receive pressure information 5 from the pressure detector 1 of the thermal energy storage vessel 10 and to determine an average temperature of the thermal energy storage medium of the thermal energy storage vessel 10 based on received pressure information 5 and based on a predetermined relationship between a pressure in the interior space 3 of the sealed tube 2 of the pressure detector 1 of the thermal energy storage vessel 10 and an average temperature of the thermal energy storage medium of the thermal energy storage vessel 10. The sealed tube can have an inner diameter 7 in the range of 3 to 15 mm and can be connected to the pressure sensor 4 and also to the wall 16 of the thermal energy storage device 10 by a compression fitting 8. The wall 9 of the sealed tube preferably comprises or consists of a material having a thermal conductivity in the range of ≥ 10 W/m·K for providing a strong thermal conductivity. The thermal energy storage vessel 10 can also comprise an outlet port 18 for domestic hot water supply, an inlet port 19 for cold mains water, an inlet port 20 for hot water supplied from a water heater and an outlet port 21 to a water heater. In this embodiment, the thermal energy storage device also comprises an immersion heater 22 as back-up heater.

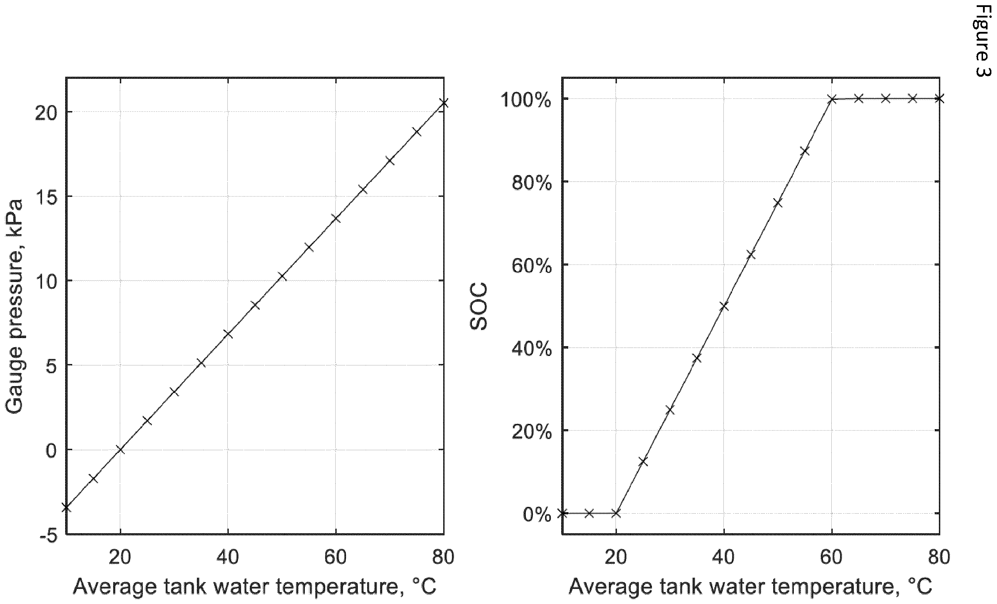

Figure 3 shows, in the left plot, a variation of a measured gauge pressure with average tank water temperature for a pressure detector according to the invention which compressible fluid consists of air. The assumed initial condition for filling and sealing the tube is 20 °C and normal pressure (1 atmosphere) and the expected variation in the measured gauge pressure, as the water in the tank (and thus also the air in the tube) is heated from an average temperature of 10 °C to an average temperature of 80 °C, is shown. The output signal from the pressure sensor can thus be calibrated to provide an indication of state of charge (SOC) within the range of the normal system operation. The right plot shows a variation in a state of charge determined as a linear function of the measured pressure between limits of 20 to 60 °C (0-13.7 kPa, gauge), wherein a SOC value of 0 is assigned to an average tank temperature ≤ 20 °C (≤ 0 kPa measured gauge pressure), and an SOC value of 100% is assigned to an average tank temperature ≥ 60 °C (≥ 13.7 kPa measured gauge pressure). All points in between are determined based on a linear relation between pressure and SOC (see Example 1 for details).

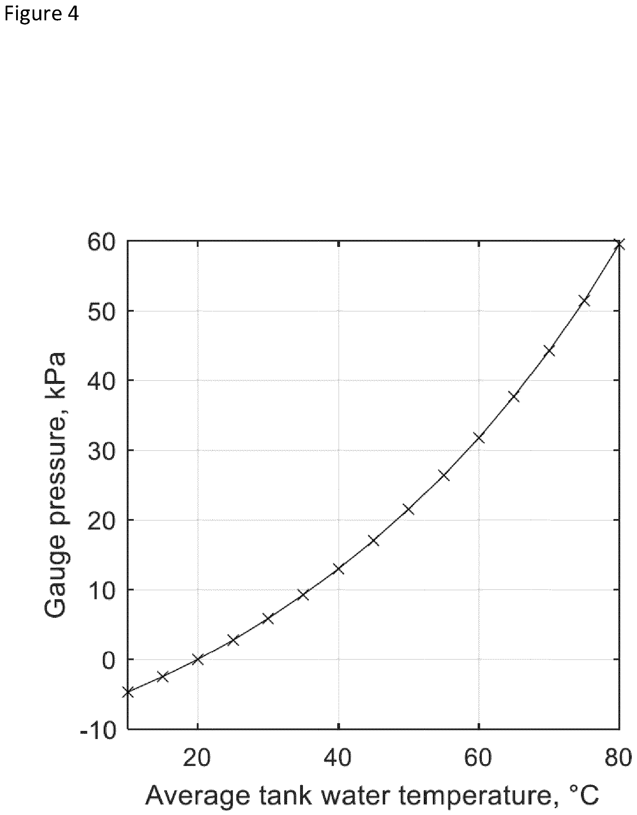

Figure 4 shows a variation of a measured gauge pressure with average tank water temperature for a pressure detector according to the invention which compressible fluid consists of both air and water, specifically 10 vol.-% air and 90 vol.-% water, in relation to the total volume of the internal space of the sealed tube. The assumed initial condition for filling and sealing the tube is 20 °C; 1 atmosphere. Water is an incompressible fluid and air is a compressible fluid. Here, the effective enclosed volume of the compressible fluid is smaller than for the air-only case of Figure 3, and the resulting pressure rise in response to increased average temperature along the height of the tube is larger. The combined expansion of the water and compression of the air with increasing average temperature results in a larger relative increase in pressure compared to the air-only situation of Figure 3, but a higher degree of non-linearity of the response (exponential response). However, the non-linearity can be corrected by an empirically determined correlation between a determined average temperature and a determined pressure by applying a suitable non-linear fitting function (e.g. a second-order polynomial equation), i.e. by empirically calibrating the pressure sensor. Alternatively, a mathematical formula based on the ideal gas law and the known thermal expansion coefficient of the incompressible fluid can be used (see Example 2 for details).

### Example 1 - Provision of a gas pressure detector according to the invention

First, a tube made from copper having an internal diameter between 3 to 15 mm is provided.

As compressible fluid, air is used. The tube and a detecting end of the pressure sensor are joined together to form a seal around the enclosed compressible fluid and, when sealing the tube, the air is pressurised to a standard reference condition of 1 atmosphere (= 101.3 kPa normal pressure) (i.e. 0 bar, gauge) at 20 °C (= 293.15 K).

The change in pressure within the sealed tube in dependence of an average tank water temperature can then be approximated based on the assumption of an ideal gas of fixed mass of at constant volume. In this regard, the following equation can be used for the approximation/determination: ${T}_{avg} = \left(P⋅{T}_{0}\right) / {P}_{0}$ wherein
- P:: Measured pressure [kPa]
- T_{avg}:: Average temperature of the thermal energy storage medium corresponding to P [K]
- P₀:: Reference pressure [kPa] (e.g. 101.3 kPa, i.e. normal pressure)
- T₀:: Reference average temperature of the thermal energy storage medium corresponding to P₀ [K] (e.g. 293.15 K, i.e. room temperature).

Instead of using said equation, a relationship between a determined pressure and an average temperature of the thermal energy storage medium can also be determined empirically, i. e. the pressure sensor can be empirically calibrated.

The state of charge ("SOC" of a thermal energy storage vessel can be determined as follows: $If {T}_{avg , d} \leq {T}_{set 1} , SOC = 0 \left[%\right] ;$ $If {T}_{avg , d} > {T}_{set 1} and < {T}_{set 2} , SOC is 100 ⋅ {ΔT}_{1} / {ΔT}_{2} \left[%\right] ,$ and $If {T}_{avg , d} \geq {T}_{set 2} , SOC = 100 \left[%\right] ;$ wherein
- SOC:: state of charge;
- T_{avg, d}:: determined average temperature of the thermal energy storage medium [°C] (T_{avg, d} [°C] = T_{avg} - 273.15);
- Tₛₑₜ₁:: preset low temperature (e.g. 20 °C);
- Tₛₑₜ₂:: preset high temperature (e.g. 60 °C);
- ΔT₁:: T_{avg} - Tₛₑₜ₁;
- ΔT₂:: Tₛₑₜ₂ -Tₛₑₜ₁ (e.g. 40 °C).

### Example 2 - Provision of a gas-liquid-pressure detector according to the invention

First, a tube made from stainless steel having an internal diameter between 3 to 15 mm is provided.

Since the compressible fluid is a mixture of air and water in this example, the tube has to be first filled with water and then sealed, wherein the amount of water can be such that the internal space of the sealed tube contains 80 vol.-% of water, in relation to the total volume of the internal space of the sealed tube. When sealing the tube, the air in the tube is pressurised to a standard reference condition of 1 atmosphere (= 101.3 kPa normal pressure) (i.e. 0 bar, gauge) at 20 °C (= 293.15 K).

The change in pressure within the sealed tube in dependence of an average tank water temperature can then be approximated based on the assumption of an ideal gas-liquid mixture of fixed mass of at constant volume. In this regard, the following equation can be used for the approximation/determination: ${T}_{avg} = \frac{P ⋅ {T}_{0} ⋅ \left(ΔT⋅{V}_{liquid , 0}⋅β+{V}_{liquid , 0}-1\right)}{{P}_{0} ⋅ \left({V}_{liquid , 0}-1\right)}$ wherein
- P:: Measured pressure [kPa]
- T_{avg}:: Average temperature of the thermal energy storage medium corresponding to P [K]
- P₀:: Reference pressure [kPa] (e.g. 101.3 kPa, i.e. normal pressure)
- T₀:: Reference average temperature of the thermal energy storage medium corresponding to P₀ [K] (e.g. 293.15 K, i.e. room temperature)
- V_{liquid,0}:: Liquid fraction in the sealed tube at T₀
- β:: Thermal expansion coefficient of the liquid [K⁻¹]
- ΔT:: T_{avg} -T₀ [K]

In the present case, the liquid is water. Thus, β is 0.21·10⁻³ K⁻¹.

If the liquid was ethylene glycol, β would be 0.65·10⁻³ K⁻¹. This implies that, at a defined average temperature of the thermal energy storage medium, the measured pressure is higher than with water. The advantage is that the detection sensitivity and accuracy is increased compared to water as liquid in the sealed tube.

If the liquid was ethanol, β would be 1.09·10⁻³ K⁻¹. This implies that, at a defined average temperature of the thermal energy storage medium, the measured pressure is much higher than with water and also higher than with ethylene glycol. The advantage is that the detection sensitivity and accuracy is increased very much compared to water as liquid in the sealed tube. However, when using ethanol as liquid in the tube, it should be ensured that the ethanol in the sealed tube does not reach its boiling point. This can e.g. by ensured by ensuring that the average temperature in the interior of the thermal energy storage vessel does not exceed 80 °C.

Instead of using said equation, a relationship between a determined pressure and an average temperature of the thermal energy storage medium can also be determined empirically, i. e. the pressure sensor can be empirically calibrated.

### Example 3 - Use of the pressure detector according to the invention

The pressure detector according to the invention can be part of a thermal energy storage system comprising a multitude of thermal energy storage vessels which are connected to a local microgrid, wherein each thermal energy storage vessel comprises a pressure detector according to the invention and is associated with a dedicated electric heating device (EHD).

By activating a specific number of EHDs to charge their respective thermal energy storage vessels, the electricity demand profile can be shaped collectively at the microgrid level to shift peak loads, or to enhance the self-consumption of locally-generated renewable energy.

This method of control requires an accurate estimation of state of charge of each thermal energy storage vessel, which can be obtained by the information provided from each pressure detector according to the invention.

It is then possible to rank each thermal energy storage vessel which is part of the system and which is connected to the microgrid, according to its potential to enable dispatching of an electrical load; i.e., its potential to store thermal energy delivered by the respective EHD.

The thermal energy storage vessel with the lowest state of charge (i.e. the lowest measured temperature) is assigned the highest potential for dispatching electrical load and is preferentially selected for participation in the demand response event.

Since each thermal energy storage vessel comprises a pressure detector according to the invention, the state of charge of each thermal energy storage vessel can be determined with a higher degree of accuracy because the information provided by each pressure detector according to the invention allows a determination of the average temperature along (the height of) each thermal energy storage vessel rather than only providing information about a a single point location inside each thermal energy storage vessel.

Therefore, an improvement in the effectiveness of the demand response control can be achieved by selecting, with a higher degree of confidence, thermal energy storage vessels with a highest potential for dispatching an electrical load.

### List of reference signs

- 1:: pressure detector;
- 2:: sealed tube of pressure detector;
- 3:: internal space of pressure detector;
- 4:: pressure sensor of pressure detector;
- 5:: signal produced by pressure sensor (containing pressure information);
- 6:: length of the sealed tube;
- 7:: inner diameter of the sealed tube;
- 8:: compression fitting;
- 9:: wall of the sealed tube of the pressure detector;
- 10:: thermal energy storage vessel;
- 11:: interior space of the thermal energy storage vessel;
- 12:: top wall of the thermal energy storage vessel;
- 13:: bottom wall of the thermal energy storage vessel;
- 14:: predefined height of the interior space of the thermal energy storage vessel;

- 15:: central region of the interior space of the thermal energy storage vessel;
- 16:: wall of the thermal energy storage vessel;
- 17:: controller,
- 18:: outlet port for domestic hot water supply;
- 19:: inlet port for cold mains water;
- 20:: inlet port for hot water supplied from a water heater;
- 21:: outlet port to water heater;
- 22:: immersion heater (back-up heater).

## Claims

1. Pressure detector, comprising
a) a sealed tube having an internal space, wherein a compressible fluid is located in the internal space of the sealed tube; and
b) a pressure sensor which is configured to detect a pressure of the compressible fluid in the sealed tube, wherein the pressure sensor is configured to convert the detected pressure into a mechanical and/or electrical signal;
**characterized in that** the sealed tube has a length in the range of ≥ 50 cm.

2. Pressure detector according to the preceding claim, **characterized in that** the sealed tube
i) has a length in the range of ≥ 60 cm, preferably ≥ 70 cm, more preferably ≥ 80 cm, even more preferably ≥ 90 cm, optionally ≥ 100 cm; and/or
ii) has an inner diameter in the range of 3 to 15 mm; and/or
iii) is connected to the pressure sensor, preferably by a threaded connection and/or a compression fitting; and/or
iv) has a wall which has thickness in the range of 1 to 2 mm; and/or
v) has a wall which comprises of consists of a material having a thermal conductivity in the range of ≥ 10 W/m·K, preferably in the range of ≥ 50 W/m·K, more preferably in the range of ≥ 100 W/m·K; and/or
vi) has a wall which comprises or consists of a metal, wherein the metal is preferably selected from the group consisting of copper, bronze, brass, stainless steel and combinations thereof.

3. Pressure detector according to one of the preceding claims, **characterized in that** the compressible fluid
i) comprises of consists of a gas, wherein the gas is preferably air; and/or
ii) comprises of consists of a gas and a liquid, wherein the gas is preferably air and wherein the liquid is preferably a liquid having a boiling point of ≥ 75 °C, wherein the liquid is more preferably selected from the group consisting of water, glycol, ethanol and combinations thereof, wherein the sealed tube especially contains the liquid in a volume of 50 to 90 Vol.-%, preferably 60 to 90 Vol.-%, more preferably in 70 to 90 Vol.-%, even more preferably 80 to 90 Vol.-%, in relation to the total volume of the internal space of the sealed tube; and/or
iii) at a temperature of 20 °C, has a pressure difference to the atmosphere, optionally a pressure difference to 101,325 kPa, in the range of ≤ 0,1 kPa, preferably ≤0,01 kPa, more preferably 0 kPa.

4. Pressure detector according to one of the preceding claims, **characterized in that** the pressure sensor comprises a pressure transducer which is based on a strain gauge and which is configured to produce an electrical voltage upon mechanical deformation, or consists thereof.

5. Thermal energy storage vessel, comprising
a) an interior space, wherein the interior space has a top wall and a bottom wall and a predefined height between the top wall and the bottom wall; and
b) a thermal energy storage medium located in the interior space; and
c) a pressure detector according to one of the preceding claims; wherein the sealed tube of the pressure detector extends between the top wall and the bottom wall of the interior space of the thermal energy storage vessel.

6. Thermal energy storage vessel according to claim 5, **characterized in that** sealed tube
i) extends over a length of at least 80 %, preferably at least 85 %, more preferably at least 90 %, especially at least 95%, optionally 100%, of the predefined height of the interior space; and/or
ii) extends in central region of the interior space, wherein the central region preferably has a distance to a vertical central axis of the interior space which is maximally 50 %, preferably maximally 25 %, more preferably maximally 10 %, most preferably maximally 5 %, of the distance between the vertical central axis and a shortest distance to inner walls of the thermal energy storage vessel; and/or
iii) is connected to a wall of the vessel, preferably by a compression fitting, wherein the compression fitting more preferably forms a liquid-tight seal.

7. Thermal energy storage vessel according to one of the claims 5 or 6, **characterized in that** the pressure sensor is located at least partially, preferably completely, outside of the interior space of the vessel.

8. Thermal energy storage vessel according to one of claims 5 to 7, **characterized in that** the thermal energy storage vessel has
i) walls which comprise a thermal insulation; and/or
ii) an interior space having a volume of > 100 L; and/or
iii) an interior space having a predefined height of at least 0.5 m, preferably at least 1 m, more preferably at least 1.5 m.

9. Thermal energy storage vessel according to one of the claims 5 to 8, **characterized in that** the thermal energy storage medium does not change its aggregation state in a temperature range between 0 °C to 90 °C, wherein the thermal energy storage medium preferably comprises or consists of a liquid, more preferably
i) water; and/or
ii) an oil; and/or
iii) a polyalcohol, preferably ethylene glycol.

10. Thermal energy storage system, comprising
a) at least one thermal energy storage vessel according to one of the claims 5 to 9, optionally a plurality of thermal energy storage vessels according to one of the claims 5 to 9; and
b) a controller;
wherein the controller is configured to receive pressure information from the pressure detector of the thermal energy storage vessel(s) and to determine an average temperature of the thermal energy storage medium of the thermal energy storage vessel(s) based on received pressure information and based on a predetermined relationship between a pressure in the interior space of the sealed tube of the pressure detector of the thermal energy storage vessel(s) and an average temperature of the thermal energy storage medium of the thermal energy storage vessel(s).

11. Thermal energy storage system according to claim 10, **characterized in that** the compressible fluid in the sealed tube consists of
i) a gas and the predetermined relationship between a pressure in the interior space of the sealed tube and an average temperature of the thermal energy storage medium is an essentially linear relationship, preferably a relationship which has been predetermined empirically, or has been predetermined, by applying the pressure-temperature law for an ideal gas, based on the following equation: ${T}_{avg} = \left(P⋅{T}_{0}\right) / {P}_{0}$ wherein
P: Measured pressure [kPa]
T_{avg}: Average temperature of the thermal energy storage medium corresponding to P [K]
P₀: Reference pressure [kPa]
T₀: Reference average temperature of the thermal energy storage medium corresponding to P₀ [K]; or
ii) a mixture of a gas and a liquid, wherein the predetermined relationship between a pressure in the interior space of the sealed tube and an average temperature of the thermal energy storage medium is an exponential relationship, preferably a relationship which has been predetermined empirically or which essentially follows the equation: ${T}_{avg} = \frac{P ⋅ {T}_{0} ⋅ \left(ΔT⋅{V}_{liquid , 0}⋅β+{V}_{liquid , 0}-1\right)}{{P}_{0} ⋅ \left({V}_{liquid , 0}-1\right)}$ wherein
P: Measured pressure [kPa]
T_{avg}: Average temperature of the thermal energy storage medium corresponsing to P [K]
P₀: Reference pressure [kPa]
T₀: Reference average temperature of the thermal energy storage medium corresponding to P₀ [K]
V_{liquid,0}: Liquid fraction in the sealed tube at T₀
β: Thermal expansion coefficient of the liquid [K⁻¹]
ΔT: T_{avg}-T₀ [K].

12. Thermal energy storage system according to one of claims 10 or 11, **characterized in that** the controller is further configured to determine a state of charge of the thermal energy storage vessel based on a determined average temperature of the thermal energy storage medium and a predetermined relationship between an average temperature of the thermal energy storage medium and a state of charge of the thermal energy storage vessel, wherein the predetermined relationship is preferably as follows: $If {T}_{avg , d} \leq {T}_{set 1} , SOC = 0 \left[%\right] ;$ $If {T}_{avg , d} > {T}_{set 1} and < {T}_{set 2} , SOC is 100 ⋅ {ΔT}_{1} / {ΔT}_{2} \left[%\right] ,$ and $If {T}_{avg , d} \geq {T}_{set 2} , SOC = 100 \left[%\right] ;$ wherein
SOC: state of charge;
T_{avg, d}: determined average temperature of the thermal energy storage medium [°C];
Tₛₑₜ₁: preset low temperature, optionally 20 °C;
Tₛₑₜ₂: preset high temperature, optionally 60 °C;
ΔT₁: T_{avg} - Tₛₑₜ₁;
ΔT₂: Tₛₑₜ₂ -Tₛₑₜ₁.

13. Method for controlling at least one thermal energy storage vessel, comprising the following steps:
a) providing at least one thermal energy storage vessel according to one of the claims 5 to 9, optionally a plurality of thermal energy storage vessels according to one of the claims 5 to 9;
b) detecting a pressure value of the compressible fluid in the sealed tube of each thermal energy storage vessel;
c) determining an average temperature of the thermal energy storage medium of each thermal energy storage vessel based on each detected pressure value and based on a predetermined relationship between a pressure in the interior space of the sealed tube and an average temperature of the thermal energy storage medium;
d) determining a state of charge of each thermal energy storage vessel based on each determined average temperature and a predetermined relationship between an average temperature of the thermal energy storage medium and a state of charge of the thermal energy storage vessel; and
e) determining, based on the determined state of charge of each thermal energy storage vessel, whether the thermal energy storage vessel shall be charged with thermal energy, wherein the thermal energy storage vessel is preferably charged with thermal energy if its determined state of charge is in the range of 0 % to < 100%.

14. Method according to claim 13, **characterized in that**, if the compressible fluid in the sealed tube consists of
i) a gas, the predetermined relationship is an essentially linear relationship, preferably a relationship which has been predetermined empirically, or has been predetermined, by applying the pressure-temperature law for an ideal gas, based on the following equation: ${T}_{avg} = \left(P⋅{T}_{0}\right) / {P}_{0}$ wherein
P: Measured pressure [kPa]
T_{avg}: Average temperature of the thermal energy storage medium corresponding to P [K]
P₀: Reference pressure [kPa];
T₀: Reference average temperature of the thermal energy storage medium corresponding to P₀ [K]; or
ii) a mixture of a gas and a liquid, the predetermined relationship is a an exponential relationship, preferably a relationship which has been predetermined empirically or which essentially follows the equation: ${T}_{avg} = \frac{P ⋅ {T}_{0} ⋅ \left(ΔT⋅{V}_{liquid , 0}⋅β+{V}_{liquid , 0}-1\right)}{{P}_{0} ⋅ \left({V}_{liquid , 0}-1\right)}$ wherein
P: Measured pressure [kPa]
T_{avg}: Average temperature of the thermal energy storage medium corresponding to P [K]
P₀: Reference pressure [kPa]
T₀: Reference average temperature of the thermal energy storage medium corresponding to P₀ [K]
V_{liquid,0}: Liquid fraction in the sealed tube at T₀
β: Thermal expansion coefficient of the liquid [K⁻¹]
ΔT: T_{avg}-T₀ [K]

15. Method according to one of claims 13 or 14, **characterized in that** the predetermined relationship in step c) is as follows: $If {T}_{avg , d} \leq {T}_{set 1} , SOC = 0 \left[%\right] ;$ $If {T}_{avg , d} > {T}_{set 1} and < {T}_{set 2} , SOC is 100 ⋅ {ΔT}_{1} / {ΔT}_{2} \left[%\right] ,$ and $If {T}_{avg , d} \geq {T}_{set 2} , SOC = 100 \left[%\right] ;$ wherein
SOC: state of charge;
T_{avg, d}: determined average temperature of the thermal energy storage medium [°C];
Tₛₑₜ₁: preset low temperature, optionally 20 °C;
Tₛₑₜ₂: preset high temperature, optionally 60 °C;
ΔT₁: T_{avg} - Tₛₑₜ₁;
ΔT₂: Tₛₑₜ₂ -Tₛₑₜ₁.
